# EUROPEAN PATENT SPECIFICATION

(11) **EP 1 425 923 B1**
(45) Date of publication and mention of the grant of the patent: **20.04.2005**
(21) Application number: 02755561.4
(22) Date of filing: 21.08.2002
(51) Int. Cl.: H04N 7/52, H04N 7/24, H04N 7/26, H04L 12/56

(54) **METHOD AND DEVICE FOR SENDING USER DATA INSERTED IN A CODED VIDEO SIGNAL**
VERFAHREN UND VORRICHTUNG ZUR ÜBERTRAGUNG VON IN KODIERTEM VIDEOSIGNAL EINGEFÜGTEN ANWENDERDATEN
PROCEDE ET DISPOSITIF D'ENVOI DE DONNEES UTILISATEUR INTRODUITES DANS UN SIGNAL VIDEO CODE

(30) Priority: 31.08.2001 EP 01402272
(43) Date of publication of application: 09.06.2004
(73) Proprietor: Koninklijke Philips Electronics N.V., 5621 BA Eindhoven (NL)
(72) Inventor: LE MAGUET, Yann, NL-5656 AA Eindhoven (NL)
(74) Representative: Charpail, François
(86) International application number: PCT/IB2002/003421
(87) International publication number: WO 2003/019951

(56) References cited:
- EP-A- 0 805 598
- US-A- 5 751 723
- "MPEG-4 VIDEO VERIFICATION MODEL VERSION 18.0" ISO/IEC JTC1/SC29/WG11 N3908, XX, XX, January 2001 (2001-01), pages 1-412, XP000997152

## Description

The present invention relates to a method of sending a user data from a video encoder to a video decoder, the user data being inserted in the coded video signal generated by said video encoder.

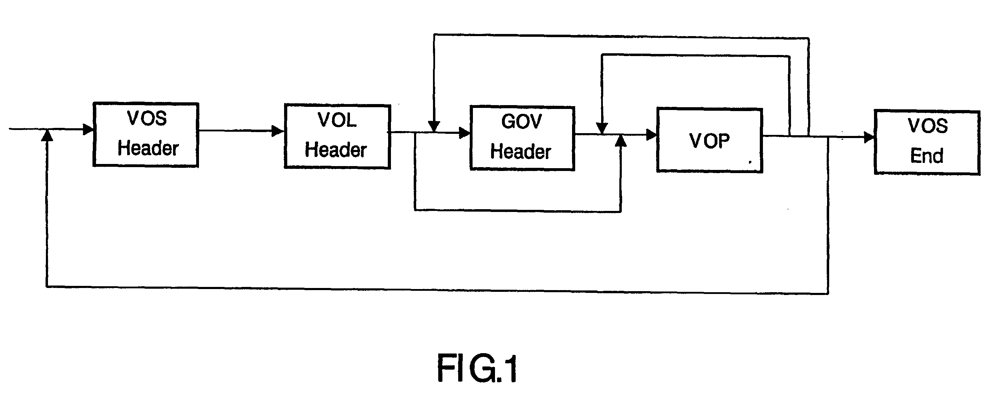

This invention may be used, for example, in the field of digital video signal processing.
The MPEG-4 video standard referred to as ISO/IEC 14496-2 allows generation of digital signals associated with protocols for representing multimedia scene content consisting of natural and synthetic visual and object data. It provides coding and compression capability for a rich set of functionalities, including the manipulation of video data as well as two and/or three dimensional graphics, interactivity in scene content, face and body animation, texture and geometric coding. It can be used in a broadcast scenario or in one-to-one interaction both in push and pull modes.
In particular, this video standard allows the insertion in coded signals of user data defined by users for their specific applications. User data are then inserted in a signal generated by a MPEG-4 encoder that is further sent to a MPEG-4 decoder which exploits said user data. User data can be inserted at three different levels in the coding syntax :
- at the Visual Object Sequence header level, referred to as "VOS header",
- at the Video Object Layer header level, referred to as "VOL header",
- at the Group Of Video object plane header level, referred to as "GOV header". The general structure of a MPEG-4 video signal (i.e. a sequence) is depicted in Figure 1 which shows how said headers are structured. Said headers precede the Video Object Plane referred to as "VOP" which corresponds to a picture when the encoded object is a rectangular picture. The sequence end is signaled by the Visual Object sequence End data packet referred to as VOS End.

Sending user data as described in this video standard has limitations if user data have to be sent periodically, in particular at the VOP level, i.e. if user data have to be associated with a given VOP, or with a plurality of successive or non-successive VOPs.

Indeed, it is not possible to use a VOS header for inserting said user data, since a VOS header is only present once at the beginning of the coded signal.
It is not possible to use a VOL header for inserting said user data, since a VOL header is most of the time only present once in the coded signal, and is moreover not always present in the syntax since this header is optional.
The GOV headers can be used for inserting user data at the VOP level, but it involves to fill the condition that the following VOP are INTRA coded, i.e. that they correspond to VOPs for which no temporal prediction is performed. Since INTRA coded VOP are bit consuming, the use of GOV headers at the VOP level dramatically leads to an increase of the bitrate of the coded signal, to the detriment of video quality. Moreover, considering that each GOV header contains many long code-words, this also contributes to the bitrate increase of said video signal. As a consequence, the use of GOV headers for inserting user data at the VOP level is limited and not appropriate.

It is an object of the invention to propose a low bit-consuming method of sending user data at the VOP level in a coded video signal.
To this end, and to solve the limitations of the prior art method, the method of sending a user data according to the invention is characterized in that said method comprises at the encoder end:
- an insertion step of inserting a set of stuffing packets at a given position in said coded video signal, the number of stuffing packets in said set being determined via a look-up table from said user data, and at the decoder end :
- an analysis step of detecting and counting the number of stuffing packets at said given position in said coded video signal, said number of stuffing packets being used for deriving said user data via said look-up table.
This method takes advantage of a special macroblock referred to as "macroblock stuffing type" defined by the MPEG-4 video standard. This special macroblock is a stuffing packet that contains small code-words that may be inserted into the coded video signal, said code-words being further discarded in the decoding process. Originally, the purpose of macroblock stuffing type is to increase the bitrate of the video signal which would otherwise be lower than the desired bitrate.
As macroblock stuffing type is a data packet requiring only a few bits, compared to the known methods described above for sending a user data, the method according to the invention for sending a user data is low bit consuming.
This method allows sending either a one-bit user data in inserting or not a single stuffing packet, or a multi-bit user data in inserting a plurality of stuffing data. This method can thus be used for sending a variable length user-data in a cost-effective manner.
This method requires a very small amount of processing resources both at the encoder end and at the decoder end. Indeed, first, at the encoder end, the processing consists of performing a cost-effective look-up table operation for defining the number of stuffing packets to be inserted in accordance with the value of the user data to be sent, and secondly consists of inserting of said stuffing packets, which is nearly costless. Secondly, at the decoder end, a small amount of processing resources is also needed since the processing consists of detecting and counting the number of stuffing packets at a known position in the coded video signal without the whole VOP data content, and to perform a cost-effective look-up table operation.
This method suppresses the constraints of the known methods since user data can not only be inserted according to the invention at the VOP level, but are also inserted in a VOP whatever the coding type of the following VOP (i.e INTRA-coded or INTER-coded).
The method according to the invention is also very flexible in its use. Indeed, as a macroblock stuffing type is considered as a coded macroblock (i.e. as a macroblock spatially-coded referred to as INTRA-coded, or temporally-predicted referred to as INTER-coded), it can be inserted between any other macroblocks in a VOP, either at the beginning or at the end of the VOP.
In a preferred mode, the invention is characterized in that the insertion step is performed at the Video Object Plane level.
Thus, a user data may be inserted in a given VOP, or in a plurality of successive or non-successive VOPs in a coded video signal.
However, this method can also be used for sending user data at a lower level than the VOP level, for example at the slice level. To this end, the insertion of user data is performed at a given position in a plurality of slices inside a given VOP. Thus the method according to the invention allows the insertion of a plurality of user data in a given VOP.

This method is fully compliant with the MPEG-4 video standard since a decoder, which is not aware of the meaning of such a macroblock stuffing type at said given position, will just discard said macroblock stuffing type without prejudice concerning the quality of the decoded video.
The multi-user data sent by the method according to the invention may correspond to or reflect coding information or a coding characteristic, in view of, for example, stopping or starting a specific application or processing at the decoder end from VOP to VOP.
The invention also relates to a method of inserting a user data in a coded video signal characterized in that said method comprises an insertion step of inserting a set of stuffing packets at a given position in said coded video signal, the number of stuffing packets in said set being determined via a look-up table from said user data.
In a preferred mode, this method of inserting a user data is performed at the Video Object Plane level.
The invention also relates to a method of retrieving a user data inserted at a given position in a coded video signal, characterized in that said method comprises an analysis step for detecting and counting the number of stuffing packets at said given position in said coded video signal, said number of stuffing packets being used for deriving said user data via a look-up table.
In a preferred mode, this method of retrieving a user data is performed at the Video Object Plane level.
The invention also relates to a system for sending a user data from a video encoder to a video decoder, the user data being inserted in the coded video signal generated by said video encoder, characterized in that said device comprises at the encoder end :
- insertion means for inserting a set of stuffing packets at a given position in said coded video signal, the number of stuffing packets in said set being determined via a look-up table from said user data,
and at the decoder end :
- analysis means for detecting and counting the number of stuffing packets at said given position in said coded video signal, said number of stuffing packets being used for deriving said user data via said look-up table.
The invention also relates to a device for inserting a user data in a coded video signal, characterized in that said device comprises insertion means for inserting a set of stuffing packets at a given position in said coded video signal, the number of stuffing packets in said set being determined via a look-up table from said user data.
In a particular aspect of the invention, the insertion step is done at the Video Object Plane level, and insertion means are activated at the Video Object Plane level.
The invention also relates to a device for retrieving a user data inserted at a given position in a coded video signal, characterized in that said device comprises analysis means for detecting and counting the number of stuffing packets at said given position in said coded video signal, said number of stuffing packets being used for deriving said user data via a look-up table.
In a preferred embodiment, said analysis means of this device for retrieving a user data are activated at the Video Object Plane level.
The invention also relates to a video encoder for encoding a video signal in view of generating a video signal coded in accordance with the MPEG-4 standard and for inserting a user data in said coded video signal. The video encoder is characterized in that it comprises means for inserting a set of stuffing packets at a given position in said coded video signal, the number of stuffing packets in said set being determined via a look-up table from said user data.
The invention also relates to a video decoder for decoding a video signal coded in accordance with the MPEG-4 standard, said coded video signal comprising a user data inserted at a given position. The video decoder is characterized in that it comprises analysis means for detecting and counting the number of stuffing packets at said given position in said coded video signal, said number of stuffing packets being used for deriving said user data via a look-up table.
The invention also relates to a first computer program comprising code instructions for implementing the steps of the method at the encoder end, and a second computer program comprising code instructions for implementing the steps of the method at the decoder end.
Detailed explanations and other aspects of the invention will be given below.

The particular aspects of the invention will now be explained with reference to the embodiments described hereinafter and considered in connection with the accompanying drawings:
Fig.1 depicts the general structure of a video signal coded in accordance with the MPEG-4 video standard,
Fig.2 depicts the different steps of the method of sending a multi-bits user data from a encoder to a decoder according to the invention,
Fig.3 depicts the different steps of the method of sending a one-bit user data from a encoder to a decoder according to the invention,
Fig.4 depicts a first example of sending a one-bit user data in a video signal coded in accordance with the MPEG-4 video standard,
Fig.5 depicts a second example of sending a two-bit user data in a video signal coded in accordance with the MPEG-4 video standard.

This method of sending a user data is described by considering that insertion of the user data is performed in a video signal coded in accordance with the MPEG-4 video standard. However, such a method of inserting user data at the VOP level (or at a lower level in a VOP) can also be used with other video standards which allow insertion of stuffing packets.

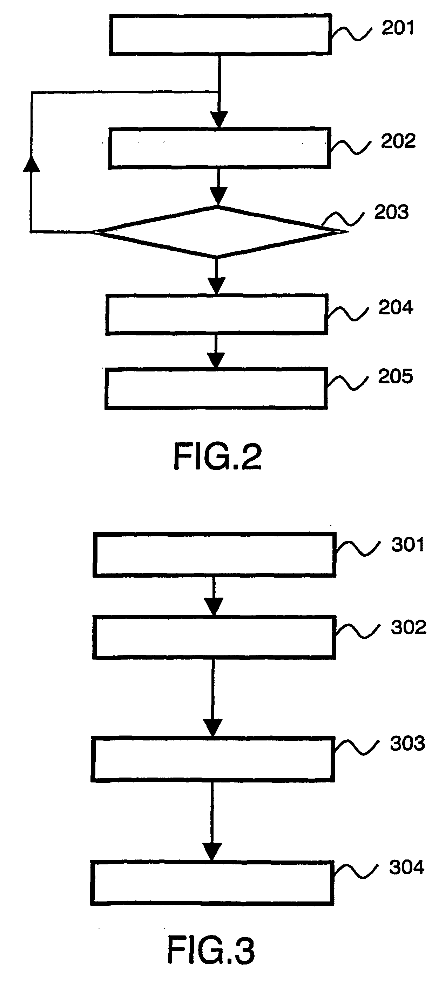

Fig.2 depicts the different steps of the method according to the invention of sending a user data from a video encoder to a video decoder. The method described in Figure 2 allows sending an N-bit user data from a video encoder to a video decoder in inserting a set of stuffing packets, N being an integer verifying N > 0.
This method is based on the insertion in the coded video signal of a set of stuffing packets. To this end, the method comprises a first linking step 201 of determining the number of stuffing packets contained in said set of stuffing packets to be inserted, in accordance with the value of the user data to be sent. The first linking step 201 consists of a look-up table operation that allows determination of the number of stuffing packets in said set, from the value of user data. Thus, conventionally, a given user data to be sent is associated with a given number of stuffing packets.
The look-up table may be such that the number of inserted stuffing packets basically corresponds to the value of the user data to be sent.
For example, if the user data to be sent is the binary value "00", the number of stuffing packets indicated by the look-up table is "0", if the user data to be sent is the binary value "01", the number of stuffing packets indicated by the look-up table is "1", if the user data to be sent is the binary value "10", the number of stuffing packets indicated by the look-up table is "2", if the user data to be sent is the binary value "11", the number of stuffing packets indicated by the look-up table is "3".
Of course, the look-up table may be such that the number of inserted stuffing packets corresponds to a multiple of the user data to be sent. More generally, the look-up table may be such that the number of inserted stuffing packets results from a transcoding of the value of the user data to be sent.
This method comprises an insertion step 202 of inserting, during the encoding of a video signal in accordance with the MPEG-4 standard, a set of stuffing packets whose number has been previously determined by the first linking step 201. Each stuffing packet corresponds to a macroblock stuffing type as defined by the MPEG-4 video standard.
The coding syntax of any macroblock defined by the MPEG-4 video standard comprises a field referred to as MBTYPE for indicating the coding type of the macroblock. The field MBTYPE for a macroblock stuffing type contains the string "stuffing", and the data of such a macroblock stuffing type comprises the code-word with value 0000 0000 1.
The insertion step may thus consist of the insertion of a field MBTYPE containing the string "stuffing" and the code-word with value 0000 0000 1.
The insertion of said set of stuffing packets is performed at the VOP level, which means that a set of stuffing packets may be inserted at least once in a given VOP, or in a plurality of successive or non-successive VOPs.
In the coded video signal, the set of stuffing packets is inserted at a given position corresponding to :
- the end of the VOP header: this corresponds to the position between the end of the VOP header and the beginning of the macroblock with rank 1 in the VOP,
- to the position between two successive macroblocks,
- the beginning of a slice ...

In case a plurality of stuffing packets is inserted in the coded video signal, depending on the value of the user data to be sent, a repetition step 203 allows the successive insertion of said plurality of stuffing packets.
The coded video signal thus generated by the encoder is sent, for example, through a communication channel, and is received by a video decoder.
An analysis step 204 is performed at the same position as the position of the set of stuffing packets inserted at the encoder end. The analysis step 204 consists of detecting stuffing packets in the coded video signal at said position in a VOP. To this end, the detection of stuffing packets may consist of the detection of the field MBTYPE containing the string "stuffing".
The analysis step 204 also consists of counting the number of stuffing packets detected by the detection step at said position.
The analysis step 204 may be performed systematically on each successive VOP if the video decoder is not aware in which VOP stuffing packets have been inserted for sending a user data. The analysis step 204 may also be performed only on VOPs for which a user data is expected, this case being possible if the frequency of user data insertion is known at the decoder end.
After the number of stuffing packets has been determined in the analysis step 204, the value of the user data is derived from the number of detected stuffing packets in the second linking step 205. The second linking step 205 consists of a look-up table operation that allows determination of the user data from the number of stuffing packets. The look-up table used in the second linking step 205 corresponds to the inverse table of the look-up table used in the first linking step 201.
For example, in using the inverse table of the above mentioned look-up table used at the encoder end, if the number of stuffing packets is "0" (i.e. no stuffing packets were effectively inserted at the encoder end) the user data sent is the binary value "00", if the number of stuffing packets is "1", the user data sent is the binary value "01", if the number of stuffing packets is "2", the user data sent is the binary value "10", if the number of stuffing packets is "3", the user data sent is the binary value "11".
This method implies for the video decoder to be informed of the position where the set of stuffing packets is inserted at the encoder end, and to be able to retrieve the user data from the number of stuffing packets detected in the analysis step 204. For example, the information relative to said position and to the content of said look-up table can be sent in user data during the initialization step of the communication between the video encoder and the video decoder, or by any proprietary transmission step. Such information can also be set definitively at the video decoder end, the video decoder just needing to know, for example via a user data sent (by known prior-art techniques) during the initialization step of the communication between the video encoder and the video decoder, that the received coded video signal comes from a encoder according to the invention in order to correctly interpret the presence of stuffing packets in the coded video signal.
Fig.3 depicts the different steps of the method of sending a one-bit user data from an encoder to a decoder according to the invention. This method is derived from the method depicted in Figure 2 because it corresponds to the particular case with N=1.
Considering a one-bit user data having only two states, such a user data can be directly expressed by the insertion in the coded video signal of a single stuffing packet (i.e. a macroblock stuffing type). Thus, the presence or the non-presence of said macroblock stuffing type allows indicating the value of the one-bit user data, similarly as a flag. To this end, a first linking step 301 allows to define if the one-bit user data having a state "1" must lead to an insertion or not of a stuffing packet.
For example, conventionally, the presence of a single macroblock stuffing type may be interpreted as the value "1", while the non-presence of a macroblock stuffing type may be interpreted as the value "0".
Similarly as explanations accompanying Figure 2, the insertion of a stuffing packet is performed in the insertion step 302 at a given position in a VOP, which is not only known by the encoder but also by the decoder.
The video signal coded in accordance with the MPEG-4 standard thus generated by the encoder is sent and received by a video decoder.
A detecting step 303 is performed for detecting the presence of a stuffing packet at said given position in the VOP. The detection is performed similarly as explanations given with reference to Figure 2 in detecting the field MBTYPE containing the string "stuffing". Compared to Figure 2, where a complex analysis step 204 including a counting operation was performed, a basic detection step 303 is sufficient. In other words, the detection and the counting step lead to a single step.
The link between the presence (or the non-presence) of a single macroblock stuffing type and the value of the user data is done via a second linking step 304. The second linking step 304 consists of a look-up table operation that allows determination of the value of the user data from the presence (or the non-presence) of stuffing packets. This look-up table corresponds to the inverse table of the look-up table used in the first linking step 301.

For example, in using the inverse table of the above mentioned look-up table used at the encoder end in linking step 301, if the presence of a single macroblock stuffing type is effectively detected at said given position in the VOP, it can be assumed that the value of the one-bit user data is "1". On the contrary, if no macroblock stuffing type is detected, it can be assumed that the value of the one-bit user data is "0".

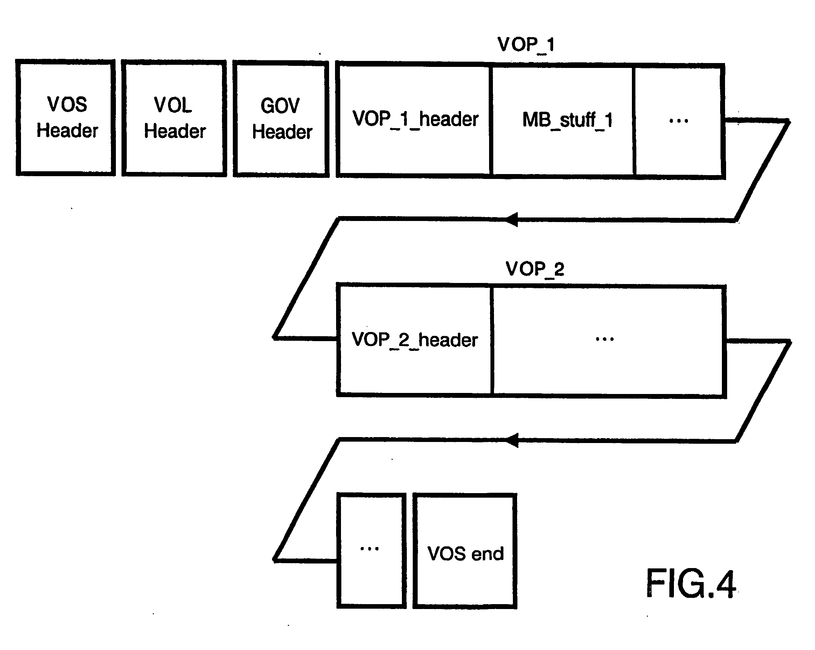

Fig.4 depicts a first example of sending a one-bit user data in a video signal coded in accordance with the MPEG-4 video standard.
Macroblocks stuffing type of rank i are referred to as MB_stuff_i. In this example, the number of inserted macroblocks stuffing type according to the value of the one-bit user data is given in look-up table 1.

| Look-up table 1 : table for sending a one-bit user data. | |
|---|---|
| User data | Number of inserted MB_stuff |
| 0 | 0 |
| 1 | 1 |

When a macroblock stuffing type is present in a VOP in which a user data is associated, it is inserted just after the VOP header of said VOP.
The coded video signal comprises a VOS header followed by a VOL header itself followed by a GOV header. These headers are dedicated to carry information used for decoding the coded video signal.
In the first VOP referred to as VOP_1, the user data "1" has to be sent To this end, using the look-up table 1, a single macroblock stuffing type MB_stuff_1 is inserted after the VOP header referred to as VOP_1_header. At the decoder end, when receiving the coded video signal, the detection after VOP_1_header of the presence of the single macroblock stuffing type is interpreted, via the inverse table of the look-up table 1, as a one-bit user data with value "1".
In the second VOP referred to as VOP_2, the user data "0" has to be sent. To this end, using the look-up table 1, no macroblock stuffing type is inserted after the VOP header VOP_2_header. At the decoder end, when receiving the coded video signal, the nondetection after VOP_2_header of a single macroblock stuffing type is interpreted, via the inverse table of the look-up table 1, as a one-bit user data with value "0".
This method of sending a one-bit user data can be applied similarly to the following VOPs in the coded video signal.

The coded video signal comprises a VOS end for indicating the end of the coded video signal.
The one-bit user data can be used at the decoder end as a flag for starting (e.g. if the user data is "1") or stopping (e.g. if the user data is "0") a specific application at the VOP level. In particular, according to the example depicted in Figure 4, the user data associated with VOP_1 can be used for starting or stopping a specific application on video data relative to VOP_2. More generally, the user data associated with the VOP of rank i can be used for starting or stopping a specific application on video data relative to the VOP of rank (i+1).
The user data can also be used at the decoder end as the value of a parameter in a specific application, for example, in a post-processing operation.

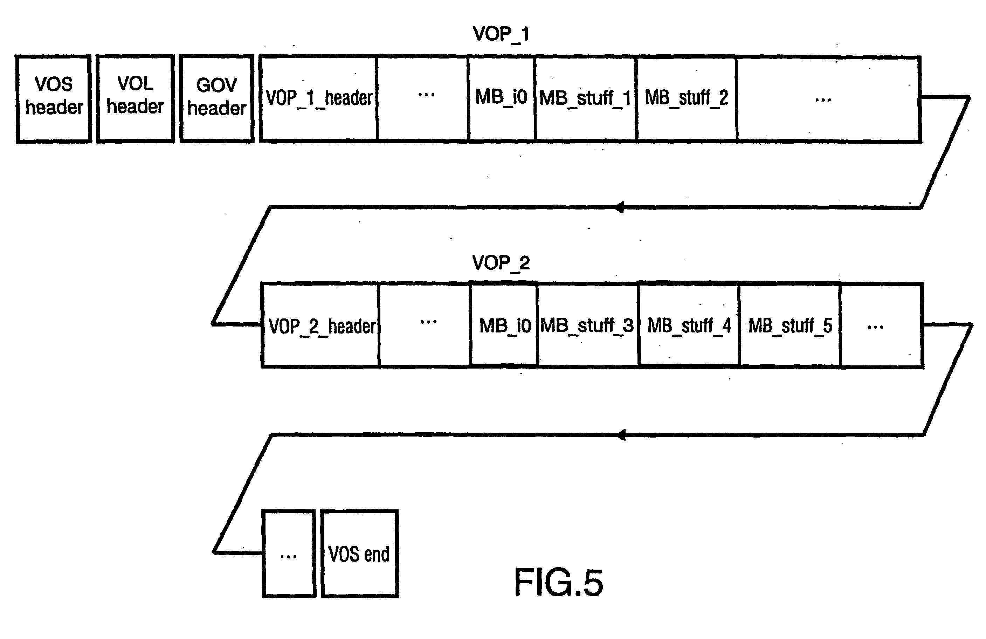

Fig.5 depicts a second example of sending a two-bit user data in a video signal coded in accordance with the MPEG-4 video standard.
Macroblocks stuffing type of rank i are referred to as MB_stuff_i. In this example, the number of inserted macroblocks stuffing type according to the value of the two-bit user data is given in look-up table 2.

| Look-up table 2 : Look-up table for sending two-bit user data. | | |
|---|---|---|
| User data | | Number of inserted MB_stuff |
| bit 1 | bit 2 | |
| 0 | 0 | 0 |
| 0 | 1 | 1 |
| 1 | 0 | 2 |
| 1 | 1 | 3 |

When macroblocks stuffing type are present in a VOP in which a user data is associated, they are inserted after the coded macroblock of rank i0 in said VOP referred to as MB_i0.
The coded video signal comprises a VOS header followed by a VOL header itself followed by a GOV header. These headers are dedicated to carry information used for decoding the coded video signal.
In the first VOP referred to as VOP_1, the user data "10" has to be sent To this end, using the look-up table 2, two macroblocks stuffing type MB_stuff_1 and MB_stuff_2 are inserted after macroblock MB_i0. At the decoder end, when receiving the coded video signal, the detection and the counting after MB_i0 of two macroblocks stuffing type is interpreted, via the inverse table of look-up table 2, as a two-bit user data with value "10".
In the second VOP referred to as VOP_2, the user data "11" has to be sent. To this end, using the look-up table 2, three macroblocks stuffing type MB_stuff_3, MB_stuff_4 and MB_stuff_5 are inserted after macroblock MB_i0. At the decoder end, when receiving the coded video signal, the detection and the counting after MB_i0 of three macroblocks stuffing type is interpreted, via the inverse table of look-up table 2, as a two-bit user data with value "11".
This method of sending a two-bit user data can be applied similarly to the following VOPs in the coded video signal.
The coded video signal comprises a VOS end for indicating the end of the coded video signal.
Each bit of the two-bit user data can be used at the decoder end as a flag for starting (e.g. if the bit value is "1") or stopping (e.g. if the bit value is "0") two specific applications at the VOP level, in associating the level of the most significant bit with the state of a first application, and the level of the least significant bit with the state of a second application. In particular, according to the example depicted in Figure 5, the two-bit user data associated with VOP_1 can be used for starting or stopping independently two specific applications on video data relative to VOP_2. More generally, the bits of the two-bit user data associated with the VOP of rank i can be used for starting or stopping specific applications on video data relative to the VOP of rank (i+1).
The user data can also be used at the decoder end as the value of a parameter in a specific application, for example, in a post-processing operation.
This method of sending a user data at the VOP level as illustrated in Figures 4 and 5 can be used in particular for indicating to a video decoder that a scene cut, i.e. a sudden transition in the video content between two successive VOPs, occurs in the video signal. A user data inserted in the VOP of rank i may indicate that a scene cut occurs between the VOP of rank i and the VOP of rank (i+1). Thus, when an error concealment application is performed at the decoder end on the data relative to VOP of rank (i+1), the decoder can advantageously choose to perform a spatial error concealment (i.e. an error concealment in using only video data of VOP of rank (i+1)) if the user data (at least one bit) is interpreted as a scene cut indication, or to perform a temporal error concealment (i.e. an error concealment in using video data of previous VOPs such as the VOP of rank i) if the user data (at least one bit) is not interpreted as a scene cut indication.
The method according to the invention has been described for inserting user data at the VOP level. However, this method can also be used for inserting a plurality of user data per VOP, for example at the slice level. In this case, stuffing packets may be, for example, inserted after a slice header, or after a coded macroblock of a given rank in said slice, said insertion of stuffing packets being repeated for the plurality of slices.
The steps of the method can be implemented in a device at the encoder end and in a device at the decoder end by means of hardware elements (such as wired electronic circuits, memories, signal processors ...), or alternatively, by means of software elements such as computer programs comprising code instructions stored in a computer-readable medium, said code instructions being used in signal processors for executing some steps of the method.
As a consequence, the invention also relates to a first computer program comprising code instructions for implementing the steps of the method at the encoder end, and a second computer program comprising code instructions for implementing the steps of the method at the decoder end.
The steps of the method of inserting a user data according to the invention can be advantageously implemented in a video encoder for encoding a video signal and generating a video signal coded in accordance with the MPEG-4 standard. To this end, the video encoder comprises hardware and/or software means as described above for inserting a set of stuffing packets at a given position in said coded video signal, the number of stuffing packets in said set being determined via a look-up table from said user data.
The steps of the method of retrieving a user data according to the invention can be advantageously implemented in a video decoder for decoding a video signal coded in accordance with the MPEG-4 standard, said coded video signal comprising a user data inserted at a given position. To this end, the video decoder comprises hardware and/or software analysis means for detecting and counting the number of stuffing packets at said given position in said coded video signal, said number of stuffing packets being used for deriving said user data via a look-up table.
A coded video signal may contain a set of stuffing packets inserted at the Video Object Plane level, the number of stuffing packets in said set reflecting the value of a user data inserted in said signal, the number of stuffing packets in said set being determined via a look-up table from said user data.

In particular, such a signal may be coded in accordance with the MPEG-4 video standard. In that case, stuffing packets correspond to macroblocks stuffing type whose coding syntax comprises the field MBTYPE containing the string "stuffing", and the code-word with value 0000 0000 1.

## Claims

1. Method of sending user data from a video encoder to a video decoder, the user data being inserted in the coded video signal generated by said video encoder, **characterized in that** said method comprises at the encoder end :
- an insertion step of inserting a set of stuffing packets at a given position in said coded video signal, the number of stuffing packets in said set being determined via a look-up table from said user data,
and at the decoder end :
- an analysis step for detecting and counting the number of stuffing packets at said given position in said coded video signal, said number of stuffing packets being used for deriving said user data via said look-up table.

2. Method as claimed in claim 1, wherein said insertion step is performed at the Video Object Plane level.

3. Method of inserting user data in a coded video signal, **characterized in that** said method comprises an insertion step of inserting a set of stuffing packets at a given position in said coded video signal, the number of stuffing packets in said set being determined via a look-up table from said user data.

4. A method as claimed in claim 3, wherein said insertion step is performed at the Video Object Plane level.

5. A method of retrieving/user data inserted at a given position in a coded video signal, **characterized in that** said method comprises an analysis step of detecting and counting the number of stuffing packets at said given position in said coded video signal, said number of stuffing packets being used for deriving said user data via a look-up table.

6. A method as claimed in claim 5, wherein said analysis step is performed at the Video Object Plane level.

7. A system for sending user data from a video encoder to a video decoder, the user data being inserted in the coded video signal generated by said video encoder, **characterized in that** said device comprises at the encoder end :
- insertion means for inserting a set of stuffing packets at a given position in said coded video signal, the number of stuffing packets in said set being determined via a look-up table from said user data,
and at the decoder end :
- analysis means for detecting and counting the number of stuffing packets at said given position in said coded video signal, said number of stuffing packets being used for deriving said user data via said look-up table.

8. A system as claimed in claim 7, wherein said insertion means are activated at the Video Object Plane level.

9. A device for inserting user data in a coded video signal, **characterized in that** said device comprises insertion means for inserting a set of stuffing packets at a given position in said coded video signal, the number of stuffing packets in said set being determined via a look-up table from said user data.

10. A device as claimed in claim 9, wherein said insertion means are activated at the Video Object Plane level.

11. A device for retrieving user data inserted at a given position in a coded video signal, **characterized in that** said device comprises analysis means for detecting and counting the number of stuffing packets at said given position in said coded video signal, said number of stuffing packets being used for deriving said user data via a look-up table.

12. A device as claimed in claim 11, wherein said analysis means are activated at the Video Object Plane level.

13. A video encoder for encoding a video signal in view of generating a video signal coded in accordance with the MPEG-4 standard and for inserting user data in said coded video signal, **characterized in that** the video encoder comprises means for inserting a set of stuffing packets at a given position in said coded video signal, the number of stuffing packets in said set being determined via a look-up table from said user data.

14. A video decoder for decoding a video signal coded in accordance with the MPEG-4 standard, said coded video signal comprising user data inserted at a given position, **characterized in that** the video decoder comprises analysis means for detecting and counting the number of stuffing packets at said given position in said coded video signal, said number of stuffing packets being used for deriving said user data via a look-up table.

15. A computer program comprising a set of code instructions for implementing the steps of the method as claimed in claim 3.

16. A computer program comprising a set of code instructions for implementing the steps of the method as claimed in claim 5.

## Patentansprüche

1. Verfahren zum Übertragen von Benutzerdaten von einem Videocodierer zu einem Videodecoder, wobei die Benutzerdaten in das codierte Videosignal eingefügt sind, das von dem genannten Videocodierer erzeugt wird, **dadurch gekennzeichnet, dass** das genannte Verfahren an dem Codierer-Ende die nachfolgenden Verfahrensschritte umfasst:
- einen Einfügungsschritt zum Einfügen eines Satzes mit Stopfpaketen an einer bestimmten Stelle in dem genannten codierten Videosignal, wobei die Anzahl Stopfpakete in dem genannten Satz über eine Nachschlagtabelle aus den genannten Benutzerdaten bestimmt wird,
und an dem Decoder-Ende:
- einen Analysierschritt zum Detektieren und Zählen der Anzahl Stopfpakete an der genannten bestimmten Stelle in dem genannten codierten Videosignal, wobei die genannte Anzahl Stopfpakete zum Herleiten der genannten Benutzerdaten über die genannte Nachschlagtabelle benutzt wird.

2. Verfahren nach Anspruch 1, wobei der genannte Einfügungsschritt auf dem Pegel des Video Objektfeldes durchgeführt wird.

3. Verfahren zum Einfügen von Benutzerdaten in ein codiertes Videosignal, **dadurch gekennzeichnet, dass** das genannte Verfahren einen Einfügungsschritt umfasst zum Einfügen eines Satzes mit Stopfpaketen an einer bestimmten Stelle in dem genannten codierten Videosignal, wobei die Anzahl Stopfpakete in dem genannten Satz über eine Nachschlagtabelle aus den genannten Benutzerdaten bestimmt wird.

4. Verfahren nach Anspruch 3, wobei der genannte Einfügungsschritt auf dem Pegel des Video Objektfeldes durchgeführt wird.

5. Verfahren zum Wiedergewinnen von Benutzerdaten, die an einer bestimmten Stelle in ein codiertes Videosignal eingefügt worden sind, **dadurch gekennzeichnet, dass** das genannte Verfahren einen Analysierschritt umfasst zum Detektieren und Zählen der Anzahl Stopfpakete an der genannten bestimmten Stelle in dem genannten codierten Videosignal, wobei die genannte Anzahl Stopfpakete zum Herleiten der genannten Benutzerdaten über eine Nachschlagtabelle benutzt wird.

6. Verfahren nach Anspruch 5, wobei der genannte Analysierschritt auf dem Pegel des Video Objektfeldes durchgeführt wird.

7. System zum Übertragen von Benutzerdaten von einem Videocodierer zu einem Videodecoder, wobei die Benutzerdaten in das codierte Videosignal eingefügt werden, das von dem genannten Videocodierer erzeugt wird, **dadurch gekennzeichnet, dass** die genannte Anordnung an dem Codierer-Ende die nachfolgenden Elemente umfasst:
- Einfügungsmittel zum Einfügen eines Satzes mit Stopfpaketen an einer bestimmten Stelle in das genannte codierte Videosignal, wobei die Anzahl Stopfpakete in dem genannten Satz über eine Nachschlagtabelle aus den genannten Benutzerdaten bestimmt wird,
und an dem Decoder-Ende:
- Analysiermittel zum Ermitteln und Zählen der Anzahl Stopfpakete an der genannten bestimmten Stelle in dem genannten codierten Videosignal, wobei die genannte Anzahl Stopfpakete zum Herleiten der genannten Benutzerdaten über die genannte Nachschlagtabelle benutzt wird.

8. System nach Anspruch 7, wobei die genannten Einfügungsmittel auf dem Pegel des Video Objektfeldes aktiviert werden.

9. Anordnung zum Einfügen von Benutzerdaten in ein codiertes Videosignal, **dadurch gekennzeichnet, dass** die genannte Anordnung Einfügungsmittel aufweist zum Einfügen eines Satzes mit Stopfpaketen an einer bestimmten Stelle in das genannte codierte Videosignal, wobei die Anzahl Stopfpakete in dem genannten Satz über die Nachschlagtabelle aus den genannten Benutzerdaten bestimmt wird.

10. Anordnung nach Anspruch 9, wobei die genannten Einfügungsmittel auf dem Pegel des Video Objektfeldes aktiviert werden.

11. Anordnung zum Wiedergewinnen von Benutzerdaten an einer bestimmten Stelle in einem codierten Videosignal, **dadurch gekennzeichnet, dass** die genannte Anordnung Analysiermittel aufweist zum Detektieren und Zählen der Anzahl Stopfpakete an der genannten Stelle in dem genannten codierten Videosignal, wobei die genannte Anzahl Stopfpakete zum Herleiten der genannten Benutzerdaten über die genannte Nachschlagtabelle benutzt wird.

12. Anordnung nach Anspruch 11, wobei die genannten Analysiermittel auf dem Pegel des Video Objektfeldes aktiviert werden.

13. Videocodierer zum Codieren eines Videosignals zum Erzeugen eines entsprechend dem MPEG-4-Standard codierten Videosignals und zum Einfügen von Benutzerdaten in das genannte codierte Videosignal, **dadurch gekennzeichnet, dass** der Videocodierer Mittel aufweist zum Einfügen eines Satzes mit Stopfpaketen an einer bestimmten Stelle in das genannte codierte Videosignal, wobei die Anzahl Stopfpakete in dem genannten Satz über die Nachschlagtabelle aus den genannten Benutzerdaten bestimmt wird.

14. Videodecoder zum Decodieren eines entsprechend dem MPEG-4-Standard codierten Videosignals, wobei das genannte codierte Videosignal Benutzerdaten aufweist, die an eine bestimmte Stelle eingefügt sind, **dadurch gekennzeichnet, dass** der Videodecoder Analysiermittel aufweist zum Detektieren und Zählen der Anzahl Stopfpakete an der bestimmten Stelle in dem genannten codierten Videosignal, wobei die Anzahl Stopfpakete zum Herleiten der genannten Benutzerdaten über die Nachschlagtabelle benutzt wird.

15. Computerprogramm mit einem Satz von Codeinstruktionen zum Implementieren der Verfahrensschritte nach Anspruch 3 .

16. Computerprogramm mit einem Satz von Codeinstruktionen zum Implementieren der Verfahrensschritte nach Anspruch 5.

## Revendications

1. Procédé d'envoi de données personnelles d'un codeur vidéo à un décodeur vidéo, les données personnelles étant insérées dans le signal vidéo codé généré par ledit codeur vidéo, **caractérisé en ce que** ledit procédé comprend, à l'extrémité codeuse :
- une étape d'insertion consistant à insérer un ensemble de paquets de remplissage à une position donnée dans ledit signal vidéo codé, le nombre de paquets de remplissage dans ledit ensemble étant déterminé par l'intermédiaire d'une table de consultation à partir desdites données personnelles,
et à l'extrémité décodeuse :
- une étape d'analyse pour détecter et compter le nombre de paquets de remplissage à ladite position donnée dans ledit signal vidéo codé, ledit nombre de paquets de remplissage étant utilisé pour déterminer ladite donnée personnelle par l'intermédiaire de ladite table de consultation.

2. Procédé selon la revendication 1, dans lequel ladite étape d'insertion est effectuée au niveau du Plan d'Objets Vidéo.

3. Procédé d'insertion de données personnelles dans un signal vidéo codé, **caractérisé en ce que** ledit procédé comprend une étape d'insertion consistant à insérer un ensemble de paquets de remplissage à une position donnée dans ledit signal vidéo codé, le nombre de paquets de remplissage dans ledit ensemble étant déterminé par l'intermédiaire d'une table de consultation à partir desdites données personnelles.

4. Procédé selon la revendication 3, **caractérisé en ce que** ladite étape d'insertion est exécutée au niveau du Plan d'Objets Vidéo.

5. Procédé d'extraction de données personnelles insérées à une position donnée dans un signal vidéo codé, **caractérisé en ce que** ledit procédé comprend une étape d'analyse consistant à détecter et à compter le nombre de paquets de remplissage à ladite position donnée dans ledit signal vidéo codé, ledit nombre de paquets de remplissage étant utilisé pour extraire lesdites données personnelles par l'intermédiaire d'une table de consultation.

6. Procédé selon la revendication 5, **caractérisé en ce que** ladite étape d'analyse est exécutée au niveau du Plan d'Objets Vidéo.

7. Système d'envoi de données personnelles d'un codeur vidéo à un décodeur vidéo, les données personnelles étant insérées dans le signal vidéo codé généré par ledit codeur vidéo, **caractérisé en ce que** ledit dispositif comprend, à l'extrémité codeuse :
- des moyens d'insertion pour insérer un ensemble de paquets de remplissage à une position donnée dans ledit signal vidéo codé, le nombre de paquets de remplissage dans ledit ensemble étant déterminé par l'intermédiaire d'une table de consultation à partir desdites données personnelles,
et à l'extrémité décodeuse :
- des moyens d'analyse pour détecter et compter le nombre de paquets de remplissage à ladite position donnée dans ledit signal vidéo codé, ledit nombre de paquets de remplissage étant utilisé pour déterminer lesdites données personnelles par l'intermédiaire de ladite table de consultation.

8. Système selon la revendication 7, **caractérisé en ce que** lesdits moyens d'insertion sont activés au niveau du Plan d'Objets Vidéo.

9. Dispositif d'insertion de données personnelles dans un signal vidéo codé, **caractérisé en ce que** ledit dispositif comprend des moyens d'insertion pour insérer un ensemble de paquets de remplissage à une position donnée dans ledit signal vidéo codé, le nombre de paquets de remplissage dans ledit ensemble étant déterminé par l'intermédiaire d'une table de consultation à partir desdites données personnelles.

10. Dispositif selon la revendication 9, **caractérisé en ce que** lesdits moyens d'insertion sont activés au niveau du Plan d'Objets Vidéo.

11. Dispositif d'extraction de données personnelles insérées à une position données dans un signal vidéo codé, **caractérisé en ce que** ledit dispositif comprend des moyens d'analyse pour détecter et compter le nombre de paquets de remplissage à ladite position donnée dans ledit signal vidéo codé, ledit nombre de paquets de remplissage étant utilisé pour déterminer lesdites données personnelles par l'intermédiaire d'une table de consultation.

12. Dispositif selon la revendication 11, **caractérisé en ce que** lesdits moyens d'analyse sont activés au niveau du Plan d'Objets Vidéo.

13. Codeur vidéo pour coder un signal vidéo dans le but de générer un signal vidéo codé selon la norme MPEG-4 et d'insérer des données personnelles dans ledit signal vidéo codé, **caractérisé en ce que** le codeur vidéo comprend des moyens pour insérer un ensemble de paquets de remplissage dans ledit signal vidéo codé, le nombre de paquets de remplissage dans ledit ensemble étant déterminé par l'intermédiaire d'une table de consultation à partir desdites données personnelles.

14. Décodeur vidéo pour décoder un signal vidéo codé selon la norme MPEG-4, ledit signal vidéo codé comprenant des données personnelles insérées à une position donnée, **caractérisé en ce que** le décodeur vidéo comprend des moyens d'analyse pour détecter et compter le nombre de paquets de remplissage à ladite position donnée dans ledit signal vidéo codé, ledit nombre de paquets de remplissage étant utilisé pour déterminer lesdites données personnelles par l'intermédiaire d'une table de consultation.

15. Programme informatique comprenant un ensemble d'instructions codées pour mettre en oeuvre les étapes du procédé selon la revendication 3.

16. Programme informatique comprenant un jeu d'instructions codées pour mettre en oeuvre les étapes du procédé selon la revendication 5.
